Europäisches Patentamt

European Patent Office

Office européen des brevets

(19)

(11) Numéro de publication : **0 108 019**
**B1**

(12) FASCICULE DE BREVET EUROPÉEN

(45) Date de publication du fascicule du brevet :
27.05.87

(51) Int. Cl.⁴ : **G 21 C   7/26**

(21) Numéro de dépôt : **83402092.7**

(22) Date de dépôt : **27.10.83**

(54) **Procédé d'exploitation d'un réacteur nucléaire modéré et refroidi par de l'eau légère.**

(30) Priorité : **27.10.82 FR 8218011**

(43) Date de publication de la demande :
**09.05.84 Bulletin 84/19**

(45) Mention de la délivrance du brevet :
**27.05.87 Bulletin 87/22**

(84) Etats contractants désignés :
**AT BE CH DE GB IT LI SE**

(56) Documents cités :
**EP-A- 0 054 789**
**FR-A- 2 080 625**
**US-A- 3 929 565**

(73) Titulaire : **Framatome**
**Tour Fiat 1 place de la Coupole**
**F-92400 Courbevoie (FR)**

(72) Inventeur : **Millot, Jean-Paul**
**1 Allée des Roitelets**
**F-78310 Elancourt (FR)**

(74) Mandataire : **Fort, Jacques**
**CABINET PLASSERAUD 84, rue d'Amsterdam**
**F-75009 Paris (FR)**

Jouve. 18, rue St-Denis, 75001 Paris, France

## Description

La présente invention concerne un procédé d'exploitation d'un réacteur nucléaire modéré et refroidi par de l'eau légère et plus particulièrement un procédé comportant une phase de fonctionnement du cœur du réacteur dans un spectre neutronique décalé vers les neutrons rapides lorsque la réactivité du combustible nucléaire utilisé est importante.

Le cœur du réacteur est constitué par des assemblages combustibles dont on effectue le remplacement à des intervalles de temps déterminés. Entre deux rechargements successifs, se déroule un cycle complet de fonctionnement du réacteur.

Dans les réacteurs nucléaires modérés et refroidis à l'eau légère sous pression de type connu, il se produit lors du démarrage de la réaction de fission en chaîne en début de cycle un excédent de réactivité dépendant du taux d'enrichissement du combustible nucléaire qui doit être limité pour éviter un « emballement » de la réaction. Les moyens de limitation classiques utilisés consistent de manière conventionnelle à disposer des poisons absorbeurs de neutrons soit dissous dans l'eau de refroidissement, soit sous forme de poison consommable, c'est-à-dire à durée de vie limitée, soit enfin à l'aide de crayons absorbant les neutrons utilisés ensuite pour le pilotage du niveau de puissance du cœur.

Il en découle ainsi une perte d'énergie qui pourrait être utilisée à des fins utiles comme l'obtention de combustible fissile, comme le plutonium, permettant de réduire les besoins en uranium et les coûts de son enrichissement.

Il a été proposé dans le passé d'utiliser l'excédent de réactivité présente au démarrage de la réaction en réduisant le taux de ralentissement des neutrons par le modérateur/réfrigérant du cœur de façon à ce que les neutrons émis de ce fait à des énergies plus élevées puissent rencontrer les atomes fertiles contenus dans le combustible. L'absorption par la matière fertile de ces neutrons à haute énergie permet alors de la rendre fissile et permet ainsi d'obtenir un surcroit de combustible améliorant de ce fait la consommation de l'uranium naturel.

Le déplacement du spectre des neutrons vers des énergies plus élevées s'effectuait en réduisant le volume de modérateur de façon à ce que son effet de ralentissement perturbe le moins possible le trajet des neutrons rapides. Il est connu d'utiliser pour cette réduction du volume de modérateur une technique qui consiste à remplacer en début de vie du combustible une partie de l'eau légère constituant le réfrigérant/modérateur d'une chaudière à eau sous pression à l'aide d'un volume d'eau lourde. L'eau lourde ayant un pouvoir modérateur moins important que l'eau légère permet donc le fonctionnement du réacteur dans un spectre renforcé, c'est-à-dire dans un spectre dans lequel des neutrons de hautes énergies sont utilisés pour la conversion du matériau fertile, tel l'U 238, en matériau fissile, tel que le Pu 239. Dans ces réacteurs, au fur et à mesure de l'épuisement du combustible, c'est-à-dire lorsque sa réactivité diminue, on augmentait le volume d'eau légère et de ce fait on diminuait le volume d'eau lourde, de façon que l'effet de ralentissement du modérateur augmente, avec pour conséquence un adoucissement du spectre vers des énergies plus basses (neutrons thermiques) afin que le rapport volume de modérateur sur volume de matière fissile soit compatible avec l'auto-entretien de la réaction de fission en chaîne.

Cette opération de modification du volume de modérateur par introduction puis extraction d'eau lourde entraîne une augmentation de coût importante due au prix de l'eau lourde elle-même et à la nécessité de prévoir des circuits supplémentaires onéreux pour des opérations de dilution et de récupération.

Une autre méthode de modification du volume de modérateur dans les réacteurs refroidis à l'eau sous pression a été proposée ; elle consiste à utiliser des grappes de crayons en matériau transparent aux neutrons (alliage de zirconium) ou ayant une absorption modérée (matériau « gris ») qui sont introduits dans une partie des tubes-guides des assemblages combustibles afin d'empêcher le réfrigérant/modérateur d'y pénétrer (EP-A-0 054 789). Un tel procédé est défini dans le préambule de la revendication 1.

Ces grappes de crayons ou barres de variation de spectre restent insérées dans les tubes-guides durant le début de vie du cœur et permettent ainsi aux neutrons d'être absorbés à de hautes énergies par diminution de l'effet de ralentissement du modérateur. En cours de fonctionnement, ces grappes sont extraites et permettent au modérateur/réfrigérant de pénétrer alors dans les tubes-guides réalisant ainsi un glissement vers des énergies plus basses de façon à ce que le réacteur continue à fonctionner dans le spectre des énergies (neutrons thermiques) identiques à celui des réacteurs de puissance à eau légère connus actuellement.

Cette modification mécanique, par opposition à celle de la dilution eau lourde/eau légère, introduit toutefois des contraintes, sur le plan des équipements qui ne sont pas négligeables. Il importe donc d'obtenir un effet de conversion de matière fertile en matière fissile le meilleur possible pour contrebalancer le coût supplémentaire des équipements.

Il est par ailleurs connu dans d'autres réacteurs étudiés à ce jour d'utiliser le spectre des neutrons à haute énergie, à savoir les neutrons rapides, durant toute la période de fonctionnement d'un cœur de manière à ce que ce cœur présente un facteur de conversion élevé et produise de ce fait une quantité de matériau fissile très importante qui sera utilisée dans des nouvelles charges de combustible. A cette fin des ensembles de crayons ou d'éléments de matériau fertile sont fixés à demeure soit dans des assemblages combustibles constitués de matériau fissile soit de manière plus fréquente dans la périphérie d'une zone constituée de matériau fissile.

Des techniques antérieures décrites ci-dessus découlent le fait que toutes les études ont été dirigées vers une optimisation de l'utilisation des neutrons émis afin que l'absorption des neutrons libérés dans le spectre des neutrons rapides soit la plus productive possible en ce qui concerne la conversion en matière fissile telle que le plutonium. Or si les techniques antérieures relatives au déplacement du spectre d'un réacteur en début de vie atteignent des résultats substantiels quant à la production de plutonium qui sera consommé lors de la seconde partie de la vie du réacteur lorsqu'il fonctionnera dans le spectre des neutrons thermiques, il subsiste encore toutefois une limitation importante du bilan neutronique due au nombre de fissions excédentaires engendrées localement par les neutrons lents, lors du fonctionnement du réacteur dans le spectre décalé vers les neutrons rapides.

Le but de la présente invention est donc de proposer un procédé d'exploitation d'un réacteur nucléaire modéré et refroidi à l'eau légère comportant un cœur constitué par des assemblages combustibles plongés dans l'eau légère de modération et de refroidissement, dont on effectue le remplacement au moins partiel à des intervalles de temps déterminés, correspondant à des cycles de fonctionnement du réacteur, procédé dans lequel dans une première phase du cycle des barres de variation du spectre d'énergie des neutrons réparties régulièrement dans le cœur sont maintenues à l'intérieur du cœur, de façon à diminuer le rapport entre le volume de modérateur et le volume de matériau fissile dans le cœur et à déplacer le spectre d'énergie des neutrons vers les hautes énergies et dans une seconde phase du cycle les barres de déplacement du spectre sont extraites afin de fonctionner avec un spectre d'énergie plus faible, procédé qui permet d'augmenter la conversion de matériau fertile en matériau fissile et d'utiliser au mieux le flux neutronique dans le cœur. Elle a également pour but de fournir un réacteur permettant de mettre en œuvre le procédé.

Dans ce but, l'invention propose un procédé tel que défini ci-dessus, caractérisé en ce que les barres de variation du spectre contiennent du matériau fertile absorbant les neutrons lents ou à faible énergie, de façon à obtenir localement un déplacement accru du spectre d'énergie des neutrons vers les hautes énergies entraînant une conversion de matière combustible fertile en matière combustible fissile plus importante.

Plus particulièrement ce procédé est caractérisé en ce que le matériau absorbant des barres de variation de spectre est choisi pour produire une absorption des neutrons lents excédentaires au besoin de l'entretien de la réaction de fission en chaîne.

L'invention propose également un réacteur nucléaire modéré et refroidi par de l'eau légère, comprenant un cœur constitué par des assemblages combustibles plongés dans l'eau légère, chaque assemblage contenant du matériau fissile et du matériau fertile et ayant des tubes guides ; des grappes de crayons absorbant les neutrons destinés à piloter le niveau de puissance du cœur ; et des grappes de crayons de variation de spectre déplaçables à l'intérieur de certains au moins des tubes guides répartis dans le cœur, entre une position où les grappes sont insérées dans le cœur au cours d'une première phase de fonctionnement du réacteur, de façon à décaler le spectre d'énergie des neutrons dans le cœur vers les hautes énergies par diminution du rapport de modération, et une position où les crayons sont logés dans des équipements situés au-dessus du cœur, caractérisé en ce que les crayons des grappes de variation de spectre contiennent du matériau fertile, éventuellement avec des traces de matériau fissile, de façon à provoquer un durcissement supplémentaire du spectre par suite de l'absorption accrue des neutrons lents ou de basse énergie dans le matériau fertile.

L'invention sera mieux comprise à la lecture de la description ci-dessous et des figures jointes.

Les figures 1a, 1b, 1c représentent respectivement les courbes des spectres de neutrons en fonction de leur énergie, la courbe de la section efficace de fission de l'U 235 et du Pu 239 utilisées comme matériau fissile en fonction de l'énergie des neutrons, la courbe du taux de conversion en plutonium en fonction de l'énergie des neutrons.

La figure 2 montre une série de courbes représentant l'épuisement en matière fissile du combustible lors d'un cycle de fonctionnement d'un cœur selon les différents spectres d'énergie utilisés.

La figure 1a est une représentation de la population des neutrons nécessaires à l'entretien de la réaction en chaîne en fonction de l'énergie des neutrons (en ordonnée de flux, en abcisse l'énergie).

Si l'on observe la courbe A nous avons une représentation du spectre des neutrons émis par la matière fissile contenue dans les crayons combustibles des assemblages composant le cœur d'un réacteur nucléaire du type à eau pressurisée actuel. Les neutrons rapides sont ralentis par le modérateur et l'on s'aperçoit que la population de neutrons (par unité de volume) nécessaire à l'entretien de la réaction de fission est essentiellement constituée de neutrons thermiques dont l'énergie est proche de $0,025^{eV}$ schématisé en $A_1$ sur la figure 1a.

La courbe B représente le spectre des neutrons des réacteurs de l'art antérieur dans lesquels on diminue le taux de ralentissement des neutrons par réduction du volume du modérateur tel que schématisé en D, en utilisant des barres de variation de spectre en matériau transparent aux neutrons. Le décalage de l'énergie des neutrons est schématisé en $B_1$.

Ce décalage vers des neutrons à énergie plus élevée correspond à un durcissement du spectre qui permet l'augmentation du taux de conversion tel que représenté en $B_1$ sur la figure 1c et par conséquent un gain en plutonium réduisant la quantité de matière fissile qu'il a fallu consommer sur le combustible initial.

Toutefois, si la réaction en chaîne est maintenue conjointement par la fission d'une partie du Pu 239 produit par la fission des atomes d'U 235, il subsiste une partie de la population de neutrons qui se « thermalise ». Cette partie de la population se thermalise du fait qu'un nombre de neutrons à énergie trop élevée pour être absorbés et participer à la conversion de la matière fertile en matière fissile se ralentissent lors de leur parcours dans le modérateur. Il en découle que cette population de neutrons lents se montre excédentaire lorsque la réactivité du combustible est importante et l'on est obligé pour conserver un coefficient de multiplication toujours identique d'employer encore une forte proportion de poisons consommables.

La courbe C représente le spectre des neutrons mis en œuvre dans la présente invention et leur énergie est schématisée en $C_1$.

En se basant sur le fait que la production de plutonium est fonction du taux de conversion, l'invention propose de diminuer encore le nombre des neutrons lents excédentaires en disposant sur leur parcours des crayons d'oxyde d'uranium appauvri afin qu'ils contribuent localement à l'absorption de ces neutrons lents, ce qui a pour effet corrélativement d'augmenter localement la proportion de neutrons d'énergie plus élevée par rapport à la population totale des neutrons et de ce fait de durcir plus avant le spectre c'est-à-dire d'obtenir la fission par des neutrons à énergie plus élevée tel que représenté en F sur la figure 1a.

Le fait de durcir localement par insertion temporaire de crayons d'oxyde d'uranium appauvri dans les assemblages combustibles augmente de façon sensible, tel que représenté sur la figure 1c (point C1), le taux de conversion de l'U 238 contenu dans les assemblages, en plutonium 239, car la répartition homogène de ces crayons dans le cœur a pour effet d'entrainer un durcissement global du spectre à l'échelle du cœur du réacteur.

En outre, ces crayons, soumis eux-mêmes au flux des neutrons rapides entrainent une formation supplémentaire de plutonium 239 qui contribue à l'entretien de la réaction de fission lorsqu'ils sont insérés dans les assemblages. Cette formation de plutonium 239 est complétée par la conversion des traces d'U 235 contenues dans ces crayons et soumises à l'action des neutrons lents absorbés.

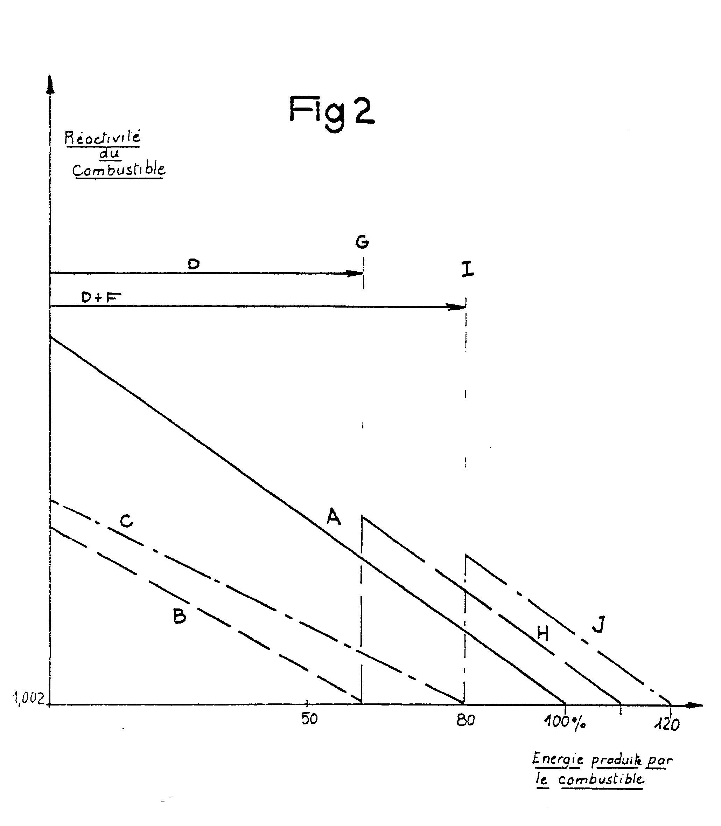

Les courbes représentées sur la figure 2 montrent les différents épuisements d'un cœur dont le combustible comporte un taux d'enrichissement initial identique en fonction des différents spectres montrés sur la figure 1a.

La courbe A représente l'épuisement théorique à 100 % d'un cœur fonctionnant dans le spectre des neutrons thermiques.

La courbe B représente l'épuisement d'un même cœur mais pour lequel un durcissement de spectre s'effectue uniquement par la réduction du volume du modérateur (D) durant une première partie du processus de fission, au moyen de grappes de crayons en alliage de zirconium. La première partie de la courbe correspond à la période pendant laquelle les crayons sont insérés dans les tubes-guides des assemblages combustibles, ce qui explique la perte de réactivité montrée à l'origine de la courbe.

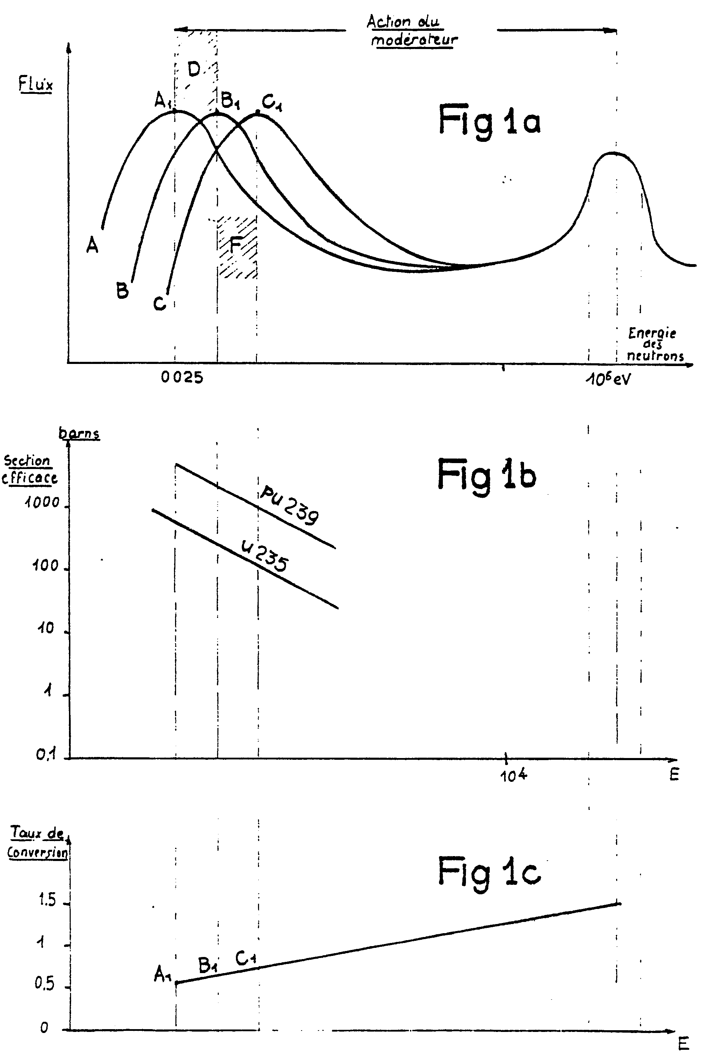

Il faut remarquer, comme on peut le voir sur la figure 1b, que le durcissement du spectre entraîne une diminution de la section efficace de fission de l'U 235. Toutefois, du fait de l'augmentation du taux de conversion, une plus grande quantité de Pu 239 est formée. Comme représenté figure 1b, la section efficace de fission du Pu 239 dans la bande d'énergie considérée est sensiblement plus élevée que celle de l'U 235 et la réactivité du combustible s'en trouve globalement améliorée.

C'est ainsi que la première partie de la courbe B de la figure 2 a une pente d'épuisement plus faible que la courbe A.

Lorsqu'on approche de la limite de réactivité à partir de laquelle le coefficient de multiplication risque de descendre en dessous de sa valeur nécessaire au maintien de la réaction en chaîne, c'est-à-dire la valeur à laquelle le nombre de neutrons émis ne sera plus suffisant, on extrait les crayons des tubes-guides tel que montré en G.

L'extraction des crayons permet au réfrigérant modérateur de pénétrer dans les tubes-guides, augmentant de ce fait le pouvoir ralentisseur et adoucit le spectre de neutrons en le ramenant vers des énergies plus basses. Cette extraction crée un regain de réactivité dû au fait que la section efficace de fission de l'U 235 et du Pu 239 augmente comme on peut le voir sur la figure 1b.

De surcroit la matière fissile créée durant la première phase de fonctionnement permet, pour un enrichissement initial identique, d'obtenir une réaction de fission entretenue plus longuement tel qu'indiqué en H.

La courbe C représente l'épuisement d'un même cœur, selon la présente invention.

L'introduction, dans les tubes-guides, de crayons constitués de pastilles en oxyde d'uranium appauvri contenues dans des gaines en alliage de zirconium permet donc d'obtenir une diminution du volume du modérateur (tel que représenté en D sur la figure 1a) et une absorption des neutrons lents entraînant un durcissement local du spectre.

Cette action décale donc globalement, puisque les crayons d'$UO_2$ appauvri se répartissent dans les assemblages constituant le cœur, le spectre des neutrons vers des énergies élevées (tel que représenté en F sur la figure 1).

De plus, le taux de conversion étant plus élevé (point $C_1$ de la figure 1c), on produit pendant cette phase une quantité plus importante de plutonium 239 participant aussi à l'entretien de la réaction de fission, ce qui fait que pour maintenir le coefficient de multiplication à la valeur nécessaire à l'entretien de la réaction de fission, on « épuise », tel que représenté en C, moins rapidement qu'en spectre thermique (courbe A) et qu'en spectre représenté en B, le combustible initial.

Lorsqu'on procède à l'extraction des crayons (Point I, figure 2), on ramène alors le spectre vers les neutrons thermiques et l'on consomme, comme indiqué en J, le regain de réactivité résultant de l'augmentation des sections efficaces de l'U 235 et du Pu 239.

A la lecture de la figure 2, on s'aperçoit de l'efficacité de l'utilisation de crayon « chasse modérateur » en oxyde d'uranium appauvri qui, en utilisant l'excédent de réactivité du combustible neuf et même en affectant cette réactivité lors du fonctionnement avec les crayons insérés, ne pénalise pas le bilan neutronique global du cœur du réacteur nucléaire.

Il est donc possible d'obtenir un gain sensiblement plus important qu'en utilisant des crayons transparents aux neutrons en décalant encore plus le spectre c'est-à-dire en le durcissant localement de façon à augmenter autant que possible le taux de conversion, tout en gardant un bilan neutronique permettant d'assurer le fonctionnement et le pilotage du réacteur pendant toute la partie du cycle où le spectre est déplacé vers les neutrons rapides.

De plus, la production de plutonium 239 se trouve augmentée et réutilisable comme combustible pour des cycles futurs. En effet ces crayons, une fois extraits, ne participent plus à la réaction en chaîne puisqu'ils sont logés dans des équipements situés au-dessus du cœur et de ce fait ne s'épuisent pas.

L'invention ne se limite pas au mode de réalisation qui a été décrit où l'on utilise de l'uranium appauvri comme matériau absorbant. On peut utiliser d'autres matériaux absorbants renfermant de la matière fertile. Il est ainsi possible d'utiliser comme matière fertile du thorium 232 qui produit de la matière fissile sous la forme d'U 233.

L'invention s'applique à tout réacteur modéré à l'eau comportant des barres de variation du spectre neutronique.

**Revendications**

1. Procédé d'exploitation d'un réacteur nucléaire modéré et refroidi par de l'eau légère comportant un cœur constitué par des assemblages combustibles plongés dans l'eau légère de modération et de refroidissement, dont on effectue le remplacement au moins partiel à des intervalles de temps déterminés, correspondant à des cycles de fonctionnement du réacteur, suivant lequel :

dans une première phase du cycle des barres de variation du spectre d'énergie des neutrons réparties régulièrement dans le cœur, sont maintenues à l'intérieur du cœur de façon à diminuer le rapport entre le volume de modérateur et le volume de matériau fissile dans le cœur et à déplacer le spectre d'énergie des neutrons vers les hautes énergies et

dans une seconde phase du cycle les barres de déplacement du spectre sont extraites afin de fonctionner avec un spectre d'énergie plus faible, caractérisé en ce que les barres de variation du spectre contiennent du matériau fertile absorbant les neutrons lents ou à faible énergie, de façon à obtenir localement un déplacement accru du spectre d'énergie des neutrons vers les hautes énergies entraînant une conversion de matière combustible fertile en matière combustible fissile plus importante.

2. Procédé d'exploitation selon la revendication 1, caractérisé en ce que le matériau des barres de variation de spectre est choisi pour produire une absorption des neutrons lents excédentaires au besoin de l'entretien de la réaction en chaîne de fission.

3. Procédé d'exploitation selon la revendication 1 ou 2, caractérisé en ce que les barres de variation du spectre contiennent au moins de l'uranium appauvri en isotope 235 ou du thorium.

4. Procédé d'exploitation selon la revendication 3, caractérisé en ce que les barres de variation du spectre sont formées de grappes de crayons constitués par des pastilles en oxyde d'uranium appauvri contenues dans une gaine tubulaire en alliage de zirconium.

5. Procédé selon l'une quelconque des revendications précédentes, caractérisé en ce que, les assemblages combustibles contiennent à la fois du matériau fissile et du matériau fertile, et lesdites barres de variation du spectre d'énergie comportent essentiellement du matériau fertile constitué par l'uranium 238 et/ou le thorium.

6. Procédé selon l'une quelconque des revendications précédentes, caractérisé en ce que les barres de déplacement du spectre sont constituées par des grappes de crayons que l'on extrait du cœur en vue du fonctionnement au cours de la seconde phase du cycle, par extraction hors de tubes guides ménagés dans les assemblages combustibles.

7. Réacteur nucléaire modéré et refroidi par de l'eau légère, comprenant un cœur constitué par des assemblages combustibles plongés dans l'eau légère, chaque assemblage contenant du matériau fissile et du matériau fertile et ayant des tubes guides ; des grappes de crayons absorbant les neutrons destinés à piloter le niveau de puissance du cœur ; et des grappes de crayons de variation de spectre déplaçables à l'intérieur le long de certains au moins des tubes guides répartis dans le cœur, entre une position où les grappes sont insérées dans le cœur au cours d'une première phase de fonctionnement du réacteur, de façon à décaler le spectre d'énergie des neutrons dans le cœur vers les hautes énergies par diminution du rapport de modération, et une position où les crayons sont logés dans des équipements situés au-dessus du cœur, caractérisé en ce que les crayons des grappes de variation de spectre contiennent du matériau fertile, éventuellement avec des traces de matériau fissile, de façon à provoquer un durcissement supplémentaire du spectre par suite de l'absorption accrue des neutrons lents dans le matériau fertile.

8. Réacteur nucléaire selon la revendication 7, caractérisé en ce que le matériau fertile contenu dans les crayons des grappes de variation de spectre est choisi dans le groupe constitué par l'uranium appauvri et le thorium.

## Claims

1. A process for operating a light water moderated and cooled nuclear reactor having a core consisting of fuel assemblies immersed in the moderated and cooling light water and which are at least partially replaced at predetermined intervals, corresponding to operating cycles of the reactor, wherein :

during a first phase of the cycle, neutron energy spectrum variation bars which are regularly distributed in the core are maintained within the core for decreasing the ratio between the volume of moderator and the volume of fissile material in the core and for shifting the neutron energy spectrum towards higher energies and,

during a second phase of the cycle, the spectrum variation bars are withdrawn for operating with a lower energy spectrum,
characterized in that the spectrum variation bars contain fertile material which absorbs the slow or low energy neutrons for locally obtaining an increased shift of the neutron energy spectrum towards higher energies resulting in an increased conversion of fertile fuel material into fissile fuel material.

2. Process of operation according to claim 1, characterized in that the material in the spectrum variation bars is selected for absorbing those slow neutrons which are in excess as compared to the needs for maintaining the fission chain reaction.

3. Process of operation according to claim 1 or 2, characterized in that the spectrum variation bars contain at least uranium depleted in isotope 235 or thorium.

4. Process of operation according to claim 3, characterized in that the spectrum variation bars are constituted of clusters of rods consisting of depleted uranium oxide pellets contained in a tubular sheath of zirconium alloy.

5. Process according to any one of the preceding claims, characterized in that the fuel assemblies contain both fissile material and fertile material and said energy spectrum variation bars essentially contain fertile material consisting of uranium 238 and/or thorium.

6. Process according to any one of the preceding claims, characterized in that the spectrum variation bars consist of rod clusters which are extracted from the core for operation during the second phase of the cycle, by removing them out of guide tubes provided in the fuel assemblies.

7. Light water moderated and cooled nuclear reactor, comprising a core consisting of fuel assemblies immersed in light water, each assembly containing fissile material and fertile material and having guide tubes ; clusters of neutron absorbing rods for controlling the power level in the core ; and clusters of spectrum variation rods movable within and along some at least of the guide tubes distributed in the core, between a position where the clusters are within the core during a first phase of operation of the reactor, for shifting the neutron energy spectrum in the core towards higher energies by decreasing the moderation ratio, and a position where the rods are located in equipments above the core, characterized in that the rods of the spectrum variation clusters contain fertile material, possibly with traces of fissile material, for causing a supplementary hardening of the spectrum due to increased absorption of the slow neutrons in the fertile material.

8. Nuclear reactor according to claim 7, characterized in that the fertile material contained in the rods of the spectrum variation clusters is selected in the group consisting of depleted uranium and thorium.

## Patentansprüche

1. Verfahren zum Betrieb eines durch Leichtwasser moderierten und gekühlten Kernreaktors, mit einem Kern, der von Brennanordnungen gebildet ist, die in das zur Moderierung und Kühlung dienende Leichtwasser eingetaucht sind und die zumindest teilweise in vorbestimmten Intervallen entsprechend den Funktionszyklen des Reaktors ersetzt werden, wobei

in einer ersten Phase des Zyklus im Kern regelmäßig verteilte Stäbe zur Änderung des Neutronenenergiespektrums im Inneren des Kernes derart gehalten werden, daß das Verhältnis zwischen dem Volumen des Moderators und dem Volumen des spaltbaren Materials im Kern verringert und das Neutronenenergiespektrum gegen die hohen Energieinhalte verlagert wird, und

in einer zweiten Phase des Zyklus die zur Verlagerung des Spektrums dienenden Stäbe herausgezogen werden, um mit einem Spektrum geringeren Energieinhaltes zu arbeiten,
dadurch gekennzeichnet, daß die Stäbe zur Änderung des Energiespektrums brütbares Material enthalten, welches die langsamen Neutronen geringen Energieinhaltes derart absorbiert, daß örtlich eine verstärkte Verlagerung des Neutronenenergiespektrums gegen die hohen Energieinhalte erreicht wird, was eine erhöhte Umwandlung von brütbarem Brennmaterial in spaltbares Brennmaterial mit sich bringt.

2. Betriebsverfahren nach Anspruch 1, dadurch gekennzeichnet, daß das Material der Stäbe zur Änderung des Energiespektrums so gewählt wird, daß eine Absorption der überschüssigen langsamen Neutronen je nach den Erfordernissen zur Aufrechterhaltung der Kettenreaktion erfolgt.

3. Betriebsverfahren nach Anspruch 1 oder 2, dadurch gekennzeichnet, daß die Stäbe zur Änderung des Energiespektrums zumindest verarmtes Uran in Form des Isotops 235 oder Thorium enthalten.

4. Betriebsverfahren nach Anspruch 3, dadurch gekennzeichnet, daß die Stäbe zur Änderung des Energiespektrums zu Bündeln von Stäben zusammengefaßt sind, die aus Tabletten aus verarmtem Uranoxyd aufgebaut sind, welche in einem Hüllrohr aus einer Zirkonlegierung enthalten sind.

5. Verfahren nach einem der vorhergehenden Ansprüche, dadurch gekennzeichnet, daß die Brennanordnungen sowohl spaltbares Material als auch brütbares Material enthalten und daß die Stäbe zur Änderung des Energiespektrums im wesentlichen brütbares Material enthalten, das aus Uran 238 und/oder Thorium besteht.

6. Verfahren nach einem der vorhergehenden Ansprüche, dadurch gekennzeichnet, daß die zur Verlagerung des Energiespektrums dienenden Stäbe zu Stabbündeln zusammengefaßt sind, die entsprechend dem Betrieb im Verlauf der zweiten Phase des Zyklus aus dem Kern herausgezogen werden, u. zw. durch Herausziehen aus den Führungsrohren, die in die Brennanordnungen eingeschaltet sind.

7. Kernreaktor, der durch Leichtwasser moderiert und gekühlt ist, mit einem Kern, der durch in Leichtwasser getauchte Brennanordnungen gebildet ist, von denen jede spaltbares Material sowie brütbares Material enthält und Führungsrohre aufweist ; mit Neutronen absorbierenden Stabbündeln zum Regeln des Leistungsniveaus des Kernes ; und mit Bündeln von Stäben zur Änderung des Energiespektrums, die im Innern zumindest entlang vorbestimmter der im Kern verteilten Führungsrohre zwischen einer Lage, in der die Bündel während einer ersten Phase des Reaktorbetriebes in den Kern in der Weise eingesetzt sind, daß sie das Neutronenenergiespektrum im Kern durch Verringerung des Moderierungsverhältnisses zu den hohen Energieinhalten verlagern, und einer Lage verschiebbar sind, in der die Stäbe in über dem Kern gelegenen Einrichtungen untergebracht sind, dadurch gekennzeichnet, daß die Stäbe der Stabbündel zur Änderung des Energiespektrums brütbares Material enthalten, gegebenenfalls mit Spuren von spaltbarem Material, derart, daß eine zusätzliche Härtung des Spektrums infolge der verstärkten Absorption von langsamen Neutronen im brütbaren Material erreicht wird.

8. Kernreaktor nach Anspruch 7, dadurch gekennzeichnet, daß das brütbare Material, das in den Bündelstäben zur Änderung des Energiespektrums enthalten ist, aus jener Gruppe gewählt ist, die durch verarmtes Uran und Thorium gebildet ist.

7

0 108 019

Fig 1a

Fig 1b

Fig 1c

Fig 2